# EUROPÄISCHE PATENTSCHRIFT

(11) **EP 1 671 733 B1**
(45) Veröffentlichungstag und Bekanntmachung des Hinweises auf die Patenterteilung: **13.08.2008**
(21) Anmeldenummer: 05027811.8
(22) Anmeldetag: 19.12.2005
(51) Int. Cl.: B23D 61/12

(54) **Sägeblatt und Handsäge**
Sawblade and handsaw
Lame de scie et scie à main

(30) Priorität: 17.12.2004 DE 102004060974; 17.12.2004 DE 102004060975
(43) Veröffentlichungstag der Anmeldung: 21.06.2006
(73) Patentinhaber: Irwin Industrial Tools GmbH, 85399 Hallbergmoos (DE)
(72) Erfinder: Hesselberg, Peter, 4300 Holbaek (DK); Field, Robert, 81679 München (DE); Geier, Manfred, 82178 Puchheim (DE); Seymour, Daniel R., Mooresville NC 28117 (US)
(74) Vertreter: Schmid, Nils T.F.

(56) Entgegenhaltungen:
- EP-A- 0 231 110
- BE-A- 522 618
- GB-A- 2 387 350
- GB-A- 191 300 538
- US-A- 1 523 518

## Beschreibung

Die Erfindung betrifft ein Sägeblatt insbesondere fiir eine hin und her zu bewegende Handsäge, an dessen Längsseite eine Sägezahnreihe ausgebildet ist. Üblicherweise sind die Sägezähne im Verlauf der Längsseite geometrisch identisch ausgebildet, wobei im Rahmen der Erfindung auch Sägezahnreihen unterschiedlicher Sägezahngeometrien längs des Sägeblatts vorgesehen sein können. Ein Sägeblatt gemäß dem Oberbegriff von Anspruch 1 ist aus der US 1,523,518 bekannt.

Einer Sägezahnreihe kann eine längs des Sägeblatts verlaufende geometrische Sägezahngrundlinie zugeordnet werden, welche sich aus gedachten Verbindungslinien von benachbarten Zahnfüßen ergibt, und die Sägezahngrundlinie kann, aber nicht notwendigerweise, parallel zur Längsseite der Sägezahnreihe verlaufen. Beispielsweise betrifft die Erfindung auch Sägezahnreihen mit Sägezähnen unterschiedlicher Sägezahnhöhen, wobei in diesem Zusammenhang unter der geometrischen Sägezahngrundlinie eine gedachte gerade Linie einer mittleren Sägezahngrundlinie, insbesondere eine die Zahnfüße verbindende Linie, verstanden sein soll. Die Sägeeffektivität einer Handsäge wird durch verschiedene Parameter, beispielsweise durch die bei einem Sägenhub mit identischer Sägekraft erreichbare Schnittiefe, bestimmt.

Aus US 1,523,518 ist ein Sägeblatt für eine Handsäge bekannt, an dessen Längsseite eine Sägezahnreihe ausgebildet ist, die eine Zahnlücke mit einem Hinterschnitt aufweist. FR 522618 offenbart ein Bandsägeblatt mit mehreren gleichen Sägegrundzähnen und jeweils einem darauf angebrachten Diamant.

EP 0 231 110 gibt ein Sägeblatt fiir eine Handsäge an, wobei eine Sägezahnreihe mehrere halbkreisförmige Zahnlücken aufweist.

Aus GB 23 873 850 B ist eine Handsäge bekannt, deren Sägeblatt eine feine Sägezahnreihe und eine grobe Sägezahnreihe aufweist.

Es ist Aufgabe der Erfindung, die Sägeeffektivität eines Sägeblatts fiir eine Handsäge zu erhöhen, ohne eine höhere Sägekraft aufwenden, ohne unter Berücksichtigung einer einfachen Herstellbarkeit Einbußen hinsichtlich der ergonomischen Funktionalität der Säge hinnehmen zu müssen und ohne die bekannten Sägezahngeometrien an sich abändern zu müssen.

Diese Aufgabe wird durch die Merkmale von Patentanspruch 1 gelöst.

Danach ist die Sägezahnreihe durch wenigstens eine Zahnlücke, vorzugsweise mehrere Zahnlücken, zwischen zwei Reihenabschnitten von mehreren, insbesondere von mehr als zwei Sägezähnen, unterteilt. Die Breite der Zahnlücke entspricht insbesondere auf Höhe der Sägezahngrundlinie im wesentlichen der Breite eines Sägezahns an der Sägezahngrundlinie, insbesondere der maximalen Breite des dazu benachbarten Sägezahns. Im Bereich wenigstens einer Zahnlücke ist erfindungsgemäß ein sich zumindest über die Sägezahngrundlinie, vor allem über den Sägezahngrund der der Zahnlücke benachbarten Zähne, in das Sägeblatt erstreckender Freiraum ausgesparten Sägeblattmaterials gebildet. Der Freiraum ist derart gestaltet, daß Sägespäne die gedachte Sägezahngrundlinie überschreiten und in die Tiefe des Freiraums gelangen können. Versuche zeigten, daß mit dem Vorsehen eines derartigen Freiraums im Sägeblatt die Menge des bei gleichbleibender Sägekraft abtragbaren Spanmaterials des zu sägenden Gegenstands deutlich erhöht werden kann. Es stellte sich überraschenderweise heraus, daß die Freiräume dazu beitragen, daß von den Sägezähnen abgehobelte Sägespäne über den Freiraum aus der Schnittfuge des Gegenstands abtransportiert werden und daß beim Austritt aus der Schnittfuge die Sägespäne aus dem Freiraum unter dem Einfluß der auf die Sägespäne wirkenden Gewichtskraft fallen können. Erfindungsgemäß ist der Freiraum mit wenigstens einem Hinterschnitt versehen, der eine deutliche Vergrößerung des durch den Freiraum gebildeten Aufnahmevolumens für Sägespäne bietet, allerdings die Festigkeit des Sägeblatts gegen Aufbeulen oder Abknicken nicht oder nur vemachlässigbar reduziert. Der Hinterschnitt kann durch einen sich von der Zahnlücke jenseits der geometrischen Sägezahngrundlinie in Längsrichtung erstreckenden Freiraumbereich definiert sein.

Der jenseits der Sägezahngrundlinie ausgesparte Freiraum kann mit einer Sägeblattlängsrichtungskomponente über einen Teilbereich eines der Zahnlücke benachbarten Reihenabschnitts, vorzugsweise beider benachbarten Reihenabschnitte, hinterschneidend ragen.

Bei einer Weiterbildung der Erfindung verjüngt sich die Zahnlücke bis zur Sägezahngrundlinie insbesondere kontinuierlich. Damit ist gewährleistet, daß abgehobelte Sägespäne aufgrund der sich verjüngenden, trichterförmigen Zahnlücke stets den Weg in den Freiraum zu deren Abtransport aus der Schnittfuge finden. Vorzugsweise ist die Zahnlücke von Zahnflanken benachbarter Sägezähne begrenzt.

Bei einer bevorzugten Ausführung der Erfindung weitet sich der Freiraum im wesentlichen ab dem Niveau der Sägezahngrundlinie in Richtung des Sägeblattinneren insbesondere kontinuierlich. Dabei kann ein maximaler Weitungswinkel des Freiraums bei wenigstens 30°, vorzugsweise bei 90°, liegen und insbesondere größer als ein maximaler Öffnungswinkel der Zahnlücke sein.

Um einen ungehinderten Zugang der Sägespäne von der Zahnlücke in den Freiraum zu schaffen, gehen die Zahnlücke und der Freiraum gemäß der Erfindung ineinander über und bilden damit eine gemeinsame Aussparung, die insbesondere im wesentlichen auf dem Niveau der Sägezahngrundlinie eine Einschnürung aufweist. Diese Einschnürung gewährleistet, daß die von dem Freiraum aufgenommenen Sägespäne während der alternierenden Bewegung der Handsäge von dem zu sägenden Gegenstand weg nicht ohne weiteres aus dem Freiraum zurück in die Schnittfuge fallen und damit die Bewegungsfreiheit des Sägeblatts behindern können. Dabei ist die Einschnürung derart zu gestalten, daß bei Befreiung des Sägeblatts aus der Schnittfuge des zu sägenden Gegenstands die in dem Freiraum aufgenommenen Sägespäne unter dem Einfluß von deren Gewichtskraft ohne weiteres herausfallen können.

Als eine besonders effektive Abtransportform der Aussparung und damit eine besonders hohe Sägeeffektivität des Sägeblatts stellte sich bei der Ausbildung der die Zahnlücke und den Freiraum bildenden Aussparung in Form eines Stiefels heraus. Hierbei kann ein Fersenteil des Freiraums der stiefelartigen Aussparung einem freien Ende des Sägeblatts und ein Zehenteil des Freiraums einem griffseitigen Ende des Sägeblatts zugewandt sein.

Bei Versuchen stellte sich heraus, daß sehr gute Abtransporte von Sägespänen erzielt werden können, wenn die longitudinale (hinsichtlich des Sägeblatts) Tiefe des Hinterschnitts wenigstens einem Viertel der mittleren Zahnhöhe der Sägezahnreihe entspricht. Als obere Grenze der longitudinalen Hinterschnittiefe wurde herausgefunden, daß diese höchstens der mittleren Sägezahnhöhe entsprechen sollte. Bei einer bevorzugten Ausführung der Erfindung ist die longitudinale Hinterschnittiefe im wesentlichen gleich der Hälfte der mittleren Sägezahnhöhe.

Bei einer Weiterbildung der Erfindung umfaßt der Freiraum einen ersten, einem freien Ende des Sägeblatts zugewandten Hinterschnitt und einen zweiten, von dem freien Ende des Sägeblatts abgewandten Hinterschnitt, wobei insbesondere der zweite Hinterschnitt von der Sägezahngrundlinie weiter entfernt ist als der erste Hinterschnitt. Vorzugsweise hat der erste Hinterschnitt eine Tiefe von ca. einem Drittel der mittleren Sägezahnhöhe, wobei der zweite Hinterschnitt eine Tiefe von ca. einer halben Sägezahnhöhe aufweist.

Besonders gute Sägeergebnisse wurden erzielt, wenn die Tiefe des Freiraums von der Sägezahngrundlinie im wesentlichen gleich einer mittleren Sägezahnhöhe der Sägezahnreihe ist.

Bei einer bevorzugten Weiterbildung der Erfindung ist der Freiraum kanalförmig gebildet, wobei sich dieser Freiraum-Kanal schräg zur Sägezahngrundlinie in das Sägeblatt erstreckt.

Dabei kann der kanalartige Freiraum einen spitzen Winkel von 15° bis 75°, vorzugsweise ca. 30°, zur Sägezahngrundlinie einnehmen. Dabei stellte sich als besonders vorteilhaft heraus, wenn der kanalartige Freiraum im Verlauf zu einem griffseitigen Ende der Handsäge gegenüber der Sägezahngrundlinie ansteigend in das Sägeblatt verläuft.

Desweiteren betrifft die Erfindung eine Handsäge mit einem erfindungsgemäßen Sägeblatt. Eine Handsäge kennzeichnet sich dadurch, daß sie manuell betätigt wird und die Sägebewegung alternierend ist. Für das Sägeblatt können jegliche Sägezahngeometrien, wie die Dreieckszahn-Geometrie, die Blattspaltsäge-Geometrie, geschränkte oder gewellte Zahnreihen, in Betracht gezogen werden.

Desweiteren kann die Erfindung unabhängig oder abhängig von den oben genannten Erfindungsaspekten ein Sägeblatt für eine geradlinige Schnittbewegung insbesondere einer manuell zu betätigenden Handsäge betreffen. Üblicherweise besitzen derartige Sägeblätter an einer Längsseite eine Vielzahl hintereinander liegender Zähne mit geringer Schnittbreite, bei der die Zahngeometrie längs der Zahnreihe im wesentlichen konstant ist. Die Zähne sind üblicherweise keilförmig und gehärtet. In den Spanräumen (Zahnlücken) werden die von Schneidkanten der Zähne abgehobelten Späne aufgenommen und aus einer dadurch erzeugten Schnittfuge herausgeführt.

Beim Ansetzen der Handsäge an dem Werkstück besteht das Problem, daß bei den ersten Sägbewegungen noch keine Schnittfuge vorhanden ist, so daß das Sägeblatt bei unachtsamem Gebrauch trotz der geschränkten Anordnung der Zähne häufig aus der gewünschten Ausrichtung gegenüber dem zu sägenden Gegenstand gerät. Auch bei angerissenen Werkstücken ist eine hohe Konzentration beim Anlegen der Säge notwendig. Das erfindungsgemäße Sägeblatt soll für eine geradlinige Schnittbewegung, insbesondere einer manuell zu betätigenden Säge geschaffen sein, welche die Nachteile des Standes der Technik überwindet, insbesondere ein einfaches Anlegen der Säge und Ansägen von Werkstücken bei Erhalt eines hohen Sägeabspanvolumens gewährleistet.

Das erfindungsgemäße Sägeblatt kann zusätzlich oder ausschließlich an einer Längsseite wenigstens einen ersten Zahnreihenabschnitt umfassen, der zumindest an einem Ende der Säge des Sägeblatts angeordnet ist und deren Zahngeometrie, Zahnform und Zahndimension im wesentlichen identisch ist. Vorzugsweise kann sie an dem freien Ende des an einem Griff montierten Sägeblatts einen ersten Zahnreihenabschnitt und an dem griffseitigen Ende des Sägeblatts einen weiteren ersten Zahnreihenabschnitt aufweisen. Erfindungsgemäß ist auch ein zweiter Zahnreihenabschnitt vorgesehen, der im wesentlichen in der Mitte des Sägeblatts liegt und unmittelbar an den ersten oder die ersten Zahnreihenabschnitte anschließen kann und deren Zahngeometrie, Zahnform und Zahndimension im wesentlichen identisch ist. Das Sägeblatt hat also zwei Zahnreihenabschnitte, die jeweils eine Reihe gleicher oder ähnlicher Zähne bilden. Erfindungsgemäß unterscheidet sich die Zahngeometrie, die Zahnform, die Zahndimension und/oder dergleichen des ersten Zahnreihenabschnitts oder der ersten Zahnreihenabschnitten derart von der Zahngeometrie, der Zahnform, der Zahngeometrie und/oder dergleichen des zweiten Zahnreihenabschnitts, daß das Spanungsvolumen des ersten Zahnreihenabschnitts insbesondere deutlich kleiner als das Spanungsvolumen des zweiten Zahnreihenabschnitts ist. Unter Spanungsvolumen ist die Menge an Sägespänen zu verstehen, die bei einer bestimmten Zähnezahl, bei gleichem Werkstückmaterial und gleichen Umgebungsbedingungen sowie bei gleicher Betätigungskraft und Betätigungsgeschwindigkeit einer Säge von dem Werkstück abgespant wird.

Vorzugsweise ist das Spanungsvolumen gleicher Zähnezahl des ersten Zahnreihenabschnitts deutlich kleiner als das des zweiten Zahnreihenabschnitts.

Bei dem erfindungsgemäßen Sägeblatt können erste und zweite Zahnreihenabschnitte auf beiden Sägeseiten ausgebildet sein.

Bei einer Weiterbildung der Erfindung ist die Zahnteilung des ersten Zahnreihenabschnitts, die durch die Zähnezahl auf 25,4 mm (einem Inch oder Zoll) der Sägeblattlänge definiert ist, größer als die Zahnteilung des zweiten Zahnreihenabschnitts. Vorzugsweise ist die Zahnteilung des ersten Zahnreihenabschnitts deutlich größer als die des zweiten Zahnreihenabschnitts. Bei einer bevorzugten Ausführung der Erfindung ist für den zweiten Zahnreihenabschnitt eine grobe Zahnteilung vorzusehen, die sich in einem Bereich von 9 Zähnen pro 25,4 mm (Zoll) definieren läßt, wobei für den ersten Zahnreihenabschnitt eine feine Zahnteilung vorgesehen sein kann, welche in einem Bereich von 12 Zähnen pro 25,4 mm (Inch) definiert ist.

Vorzugsweise ist die Zahnteilung des ersten Zahnreihenabschnitts um wenigstens ein, zwei, drei oder mehr als drei Zähne pro 25,4 mm (Inch) größer als die Zahnteilung des zweiten Zahnreihenabschnitts. Eine besonders vorteilhafte Funktion zeigen Sägeblätter, bei denen die Zahnteilung des ersten Zahnreihenabschnitts im wesentlichen um ein Drittel größer als die Zahnteilung des zweiten Zahnreihenabschnitts ist.

Für eine ideale Verwendungsergonomie kann bei dem erfindungsgemäßen Sägeblatt der erste Zahnreihenabschnitt an zumindest einem Ende des Sägeblatts zumindest über ein Sechstel der Gesamtlänge des Sägeblatts erstrecken.

Vorzugsweise entspricht die Länge des zweiten Zahnreihenabschnitts wenigstens dreimal der Länge des ersten Zahnreihenabschnitts, wenn nur ein feiner Zahnreihenabschnitt, beispielsweise am freien Ende des Sägeblatts, vorgesehen ist. Sollten zwei feine Zahnreihenabschnitte jeweils an einem Ende des Sägeblatts vorgesehen sein, so entspricht die Länge des groben Zahnreihenabschnitts im wesentlichen der Länge beider feinen Zahnreihenabschnitte.

Bei einer alternativen bevorzugten Ausführung ist die Zahnhöhe beim feinen Zahnreihenabschnitt kleiner, insbesondere deutlich kleiner, vorzugsweise um die Hälfte kleiner, als die Zahnhöhe des groben Zahnreihenabschnitts.

Desweiteren betrifft die Erfindung eine Säge, insbesondere Handsäge, mit einem erfindungsgemäßen Sägeblatt.

Weitere Vorteile, Eigenschaften und Merkmale der Erfindung werden durch die folgende Beschreibung einer bevorzugten Ausführung anhand der beiliegenden Zeichnungen deutliche, in denen zeigen:
Figur 1 eine Seitenansicht eines erfindungsgemäßen Sägeblatts für eine Handsäge; und
Figur 2 eine seitliche Detailansicht des Abschnitts A gemäß Figur 1.

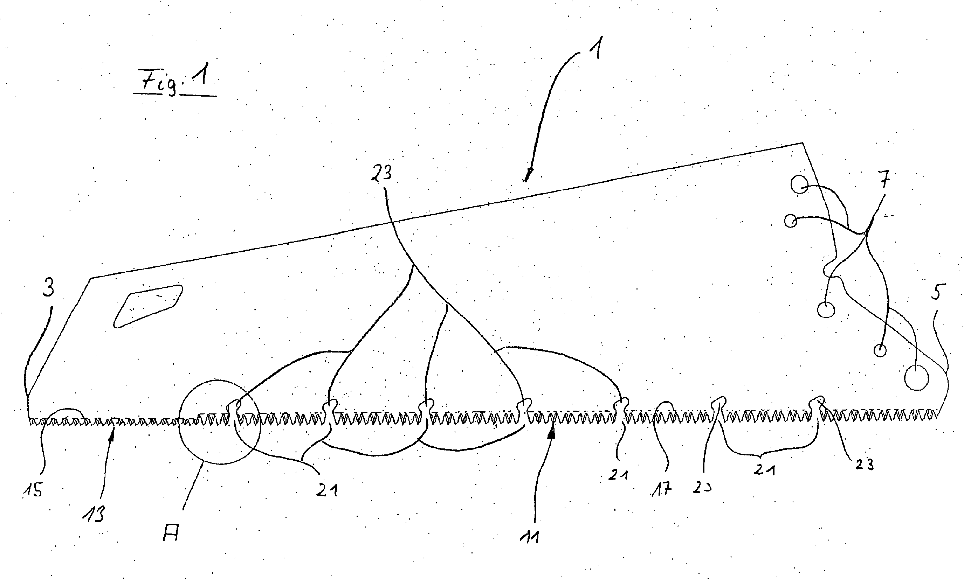

In der Figur 1 ist ein erfindungsgemäßes Sägeblatt mit der Bezugsziffer 1 versehen, das ein freies Ende 3 und ein griffseitiges Ende 5 mit Bohrungen 7 zum insbesondere lösbaren Befestigen eines nicht dargestellten Griffs aufweist.

Das Sägeblatt 1 umfaßt an einer geradlinigen Längsseite zwei Sägezahnreihen 11 und 13, wobei auch an der gegenüberliegenden Längsseite des Sägeblatts 1 erfindungsgemäße Sägezahnreihen vorgesehen sein können. Die grobe Sägezahnreihe 11 kleiner Zahnteilung (9 Zähne pro 25,4 mm (Inch)) ist für das Abspanen großer Mengen Spanmaterials vorgesehen und erstreckt sich von dem griffseitigen Ende 5 über einen Mittelabschnitt hinaus in den Bereich des freien Endes 3 des Sägeblatts 1.

Die feine Sägezahnreihe 13 größerer Zahnteilung (12 Zähne pro 25,4 mm (Inch)) ist mit kleineren Sägezähnen insbesondere gleicher Geometrie ausgebildet, was ein Ansägen eines nicht dargestellten zu sägenden Gegenstands vereinfacht.

Es soll klar sein, daß ein feiner Zahnreihenabschnitt auch am griffseitigen Ende insbesondere im wesentlichen entsprechend der Länge am freien Blattende 3 ausgebildet sein kann, damit ein ergonomisch leichtes Ansäge sowohl mit dem griffseitigen Ende 5 als auch mit dem freien Ende 3 möglich ist. Im übrigen können Zahnreihen auch unterschiedlicher Art an beiden Längsseiten liegen, allerdings für die jeweilige Zahnreihe mit im wesentlichen identischer Zahnform.

Die grobe Sägezahnreihe 11 und die feine Sägezahnreihe 13 haben jeweils eine strichliert dargestellte Sägezahngrundlinie 15 bzw. 17, die einer geometrischen Verbindungslinie der Zahnfüße entspricht.

Die grobe Sägezahnreihe ist durch sieben Zahnlücken 21 in sechs identische Reihenabschnitte von 12 hintereinander angeordneten Sägezähnen gleicher Zahngeometrie unterteilt.

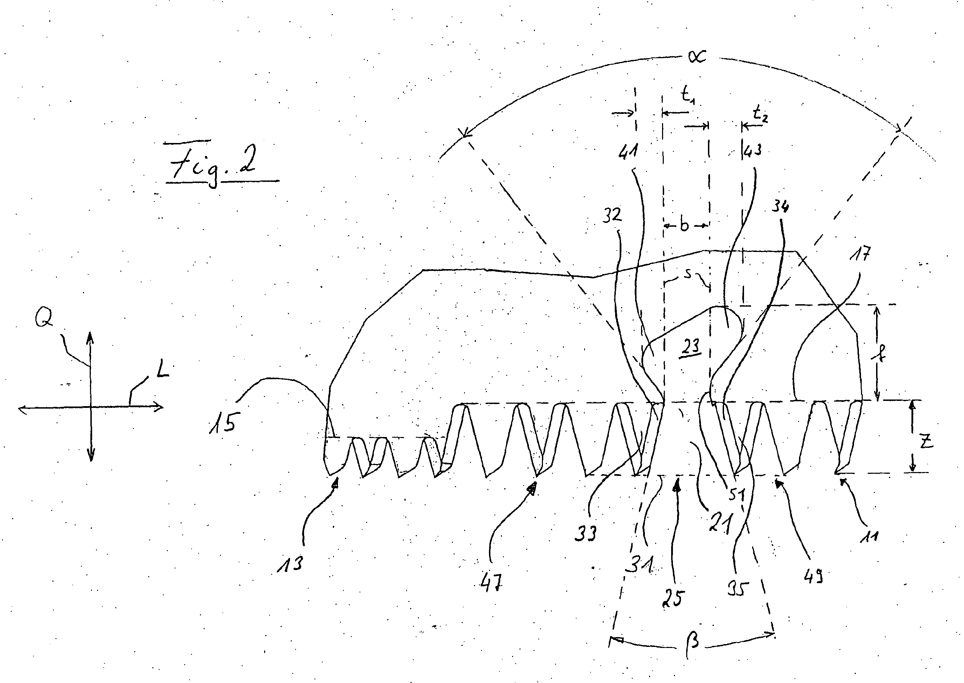

An die Zahnlücke auf dem Niveau der Sägezahngrundlinie 15 anschließend erstreckt sich hauptsächlich in Querrichtung Q des Sägeblatts 1 ein Freiraum 23 zur Aufnahme von abgehobelten Sägespänen des Gegenstands aus der Schnittfuge (nicht dargestellt). Im folgenden wird die durch die Zahnlücke 21 und den Freiraum 23 gebildete Aussparung oder Freischnitt 25 von Sägeblattmaterial anhand von Figur 2 beschrieben.

Die Zahnlücke 21 verjüngt sich von einer Sägezahnendlinie 31 kontinuierlich zur Sägezahngrundlinie 15. Die Zahnlücke 21 ist von den Zahnschneideflanken 32, 34 benachbarter Zähne 33 und 35 begrenzt.

Die Breite b am Zahnlückengrund entspricht im wesentlichen der Breite eines Sägezahns (33, 35) an dessen Fuß. Der Freiraum 23 umfaßt zwei Hinterschnitte 41 und 43, die mit einer Sägeblattlängsrichtungskomponente teilweise über den Bereich eines der Zahnlücke 21 benachbarten Reihenabschnitts 47, 49 hinterschneidend ragen. Der Freiraum 23 weitet sich, gesehen von der Sägezahngrundlinie 17 in das Sägeblattinnere, mit einem maximalen Weitungswinkel α, der bei ca. 90° liegt.

Es sei angemerkt, daß der Freiraum 23 kanten- und eckfrei nur mit Abrundungen versehen ist, damit das Herausfallen der abgehobelten Sägespäne aus dem Freiraum 23 möglichst nicht behindert wird, wenn die Säge die Schnittfuge am angesägten Gegenstand (nicht dargestellt) verläßt.

Die durch die Zahnlücke 21 und den Freiraum 23 gebildete Aussparung 25 ist im wesentlichen auf Höhe der Sägezahngrundlinie 15 mit einer Einschnürung 51 versehen.

Ein maximaler Öffnungswinkel β der Zahnlücke ist im wesentlichen mit ca. 30° festgelegt. Der Freiraum 23 umfaßt einen ersten, einem freien Ende 3 des Sägeblatts zugeordneten Hinterschnitt 41, der eine Hinterschnittiefe t₁ von im wesentlichen einem Drittel der durchschnittlichen Zahnhöhe der Sägezahnreihe 11 entspricht, die bei der in den Figuren 1 und 2 dargestellten Ausführungen gleich der konstanten Zahnhöhe Z der gesamten Sägezahnreihe 11 ist. Der zweite Hinterschnitt 43 umfaßt eine Hinterschnittiefe t₂, die im wesentlichen der Hälfte der mittleren Zahnhöhe entspricht. Die Tiefe der Hinterschnitte ergibt sich aus der größten Entfernung eines Hinterschnittrandes in Längsrichtung L des Sägeblatts 1 zu einer Senkrechten s auf Höhe der Einschnürung 51.

Die Tiefe f des Freiraums 23 ergibt sich aus dem größten Abstand eines Freiraumrandes in Querrichtung Q des Sägeblatts 1 gegenüber der Sägezahngrundlinie zur Längsrichtung des Sägeblatts 1. Die Tiefe f ist im wesentlichen gleich der mittleren Sägezahnhöhe Z. Wie insbesondere in Figur 2 ersichtlich ist, bildet der Freiraum 23 teilweise einen Kanal, der sich schräg zur Sägezahngrundlinie 15 vom freien Ende 3 zum griffseitigen Ende 5 gesehen ansteigend verläuft.

Mit der oben beschriebenen besonderen Geometrie von Zahnlücke 21 und Freiraum 23 stellte sich heraus, daß die Sägeeffektivität des Sägeblatts 1 deutlich gesteigert werden kann. Mit dem Freiraum 23 und Hinterschnitten 41, 43 ist ein großes Volumen zur Aufnahme von Sägespänen gebildet, die sich beim Eingriff der Sägezähne in den Gegenstand bilden. Durch das Vorsehen des Freiraums 23 mit Hinterschnitten 41, 43 werden die abgehobelten Späne von den Schneidflanken der Sägezähne über die Zahnlücke von der Schnittfuge weg abtransportiert, so daß die Sägespäne den Schneidvorgang nicht behindern können.

Tritt das Sägeblatt 1 aus dem zu sägenden Gegenstand heraus, fallen die Sägespäne, veranlaßt einerseits durch die Sägebewegung des Sägeblatts und andererseits durch die eigene Gewichtskraft, aus dem Freiraum 23, so daß dieser beim nächsten Eindringen in den Gegenstand wieder neue Sägespänen aufnehmen kann.

Der Hinterschnitt 41, 43 bringt bei Gewährleistung eines großen Aufnahmevolumens für Sägespäne keine Einbußen hinsichtlich der Festigkeit des Sägeblatts 1 durch den Materialverlust des Freiraum 23 wegen mit sich.

### Bezugszeichenliste

- 1: Sägeblatt
- 3: freies Ende des Sägeblatts
- 5: griffseitiges Ende des Sägeblatts
- 7: Bohrungen
- 11, 13: Sägezahnreihen
- 15, 17: Sägezahngrundlinie
- 21: Zahnlücke
- 23: Freiraum
- 25: Aussparung
- 31: Sägezahnendlinie
- 32, 34: Zahnschneideflanken
- 33, 35: Sägezähne
- 41,43: Hinterschnitte
- 47, 49: Reihenabschnitte
- 51: Einschnürung
- A: Abschnitt
- α: Weitungswinkel
- b: Breite
- β: maximaler Öffnungswinkel
- f: Tiefe des Freiraums
- L: Längsrichtung
- Q: Querrichtung
- s: Senkrechte
- t₁, t₂: Hinterschnittiefe
- Z: Sägezahnhöhe

## Patentansprüche

1. Sägeblatt insbesondere für eine Handsäge, an dessen Längsseite eine Sägezahnreihe (11) ausgebildet ist, die eine sich längs des Sägeblatts verlaufende geometrische Sägezahngrundlinie (17) aufweist und die durch wenigstens eine im wesentlichen einer Zahnbreite entsprechende Zahnlücke (21), vorzugsweise mehrere Zahnlücken (21), in Reihenabschnitte (47, 49) von mehreren, insbesondere von mehr als zwei Sägezähnen unterteilt ist, wobei im Bereich einer Zahnlücke (21) ein sich über die Sägezahngrundlinie (17) in das Sägeblatt (1) erstreckender Freiraum (23) ausgesparten Sägeblattmaterials mit einem Hinterschnitt (41, 43) versehen ist, wobei die Zahnlücke (21) und der Freiraum (23) ineinander übergehen und eine Aussparung (25) bilden, **dadurch gekennzeichnet, daß** die Aussparung (25) im wesentlichen auf dem Niveau der Sägezahngrundlinie (17) eine Einschnürung (51) aufweist.

2. Sägeblatt nach Anspruch 1, bei welchem der jenseits der Sägezahngrundlinie (17) ausgesparte Freiraum (23) mit einer insbesondere nicht vernachlässigbaren Sägeblattlängsrichtungskomponente über einen Teilbereich eines benachbarten Reihenabschnitts (47, 49), vorzugsweise beider Reihenabschnitte, hinterschneidend ragt.

3. Sägeblatt nach Anspruch 1 oder 2, bei welchem die Zahnlücke (21) sich bis zur Sägezahngrundlinie (17) insbesondere kontinuierlich verjüngt, insbesondere die Zahnlücke (21) von Zahnflanken benachbarter Sägezähne (33, 35) begrenzt ist.

4. Sägeblatt nach einem der Ansprüche 1 bis 3, bei welchem sich der Freiraum (23) im wesentlichen ab dem Niveau der Sägezahngrundlinie (17) insbesondere kontinuierlich weitet, vorzugsweise mit einem maximalen Weitungswinkel (α) von mindestens ca. 30°, insbesondere ca. 90°.

5. Sägeblatt nach Anspruch 4, bei welchem der maximale Weitungswinkel (α) des Freiraums (23) größer als ein maximaler Öffnungswinkel (β) der Zahnlücke (21) ist.

6. Sägeblatt nach einem der Ansprüche 1 bis 5, bei welchem die Aussparung (25) im wesentlichen die Form eines Stiefels aufweist, wobei insbesondere ein Fersenteil des Freiraums einem freien Ende (3) des Sägeblatts (1) und ein Zehenteil des Freiraums einem griffseitigen Ende (5) des Sägeblatts (1) zugeordnet ist.

7. Sägeblatt nach einem der Ansprüche 1 bis 6, bei welchem eine Hinterschnittiefe (t₁, t₂) wenigstens einem Viertel der mittleren Sägezahnhöhe der Sägezahnreihe (11) entspricht.

8. Sägeblatt nach einem der Ansprüche 1 bis 7, bei welchem eine Hinterschnittiefe (t₁, t₂) höchstens der mittleren Sägezahnhöhe der Sägezahnreihe entspricht, vorzugsweise gleich der Hälfte der mittleren Sägezahnhöhe ist.

9. Sägeblatt nach einem der Ansprüche 1 bis 8, bei welchem der Freiraum (23) einen ersten, einem freien Ende (3) des Sägeblatts (1) zugewandten Hinterschnitt (41) und einen zweiten, dem freien Ende (3) des Sägeblatts (1) abgewandten Hinterschnitt (43) umfaßt, wobei insbesondere der zweite Hinterschnitt (43) von der Sägezahngrundlinie (17) weiter entfernt ist als der erste Hinterschnitt (41).

10. Sägeblatt nach Anspruch 9, bei welchem ein Hinterschnittvolumen des ersten und des zweiten Hinterschnitts (43) im wesentlichen gleich groß oder das Hinterschnittvolumen des zweiten Hinterschnitts (43) größer als das des ersten Hinterschnitts (41) ist, vorzugsweise um mindestens das 1,5 fache größer ist.

11. Sägeblatt nach einem der Ansprüche 1 bis 10, bei welchem eine Freiraumtiefe (f) von der Sägezahngrundlinie (17) im wesentlichen gleich einer mittleren Sägezahnhöhe der Sägezahnreihe (11) ist.

12. Sägeblatt nach einem der Ansprüche 1 bis 11, bei welcher der Freiraum (23) sich kanalartig schräg zur Sägezahngrundlinie (11) in das Sägeblatt (1) erstreckt, insbesondere in einem spitzen Winkel von 15° bis 75°, vorzugsweise ca. 30°, wobei insbesondere der kanalartige Freiraum (23) im Verlauf zu einem griffseitigen Ende (5) des Sägeblatts (1) gegenüber der Sägezahngrundlinie (17) ansteigend in das Sägeblatt (1) verläuft.

13. Sägeblatt nach einem der Ansprüche 1 bis 12, **dadurch gekennzeichnet, daß** die Breite b der Zahnlücke (21) an der Sägezahngrundlinie (17) im wesentlichen der Breite eines Sägezahns (33, 35) an der Sägezahngrundlinie (17), insbesondere der maximalen Breite des benachbarten Sägezahns, entspricht.

14. Sägeblatt nach einem der Ansprüche 1 bis 13, **dadurch gekennzeichnet, daß** es fiir eine geradlinige Schnittbewegung insbesondere einer manuell zu betätigenden Säge ausgebildet ist und umfasst an einer Längsseite wenigstens einen ersten Zahnreihenabschnitt, der zumindest an einem Ende des Sägeblatts (1) ausgebildet ist und dessen Zahngeometrie, Zahnform, und/oder Zahndimension identisch oder ähnlich ist, und einen zweiten Zahnreihenabschnitt (5), der im wesentlichen in der Mitte des Sägeblatts (1) ausgebildet ist und dessen Zahngeometrie, Zahnform und/oder Zahndimension identisch oder ähnlich ist, wobei sich die Zahngeometrie, die Zahnform, die Zahndimension und/oder dergleichen des ersten Zahnreihenabschnitts derart von der Zahngeometrie, die Zahnform, die Zahndimension und/oder dergleichen des zweiten Zahnreihenabschnitts unterscheidet, daß das Spanungsvolumen einer festgelegten Zähnezahl des ersten Zahnreihenabschnitts kleiner als das Spanungsvolumen gleicher Zähnezahl des zweiten Zahnreihenabschnitts ist.

15. Sägeblatt nach Anspruch 14, bei dem die Zahnteilung des ersten Zahnreihenabschnitts größer als die Zahnteilung des zweiten Zahnreihenabschnitts (5) ist.

16. Sägeblatt nach Anspruch 15, bei dem die Zahnteilung des ersten Zahnreihenabschnitts um wenigstens 1, vorzugsweise wenigstens 2, besonders vorzugsweise wenigstens 3 Zähne pro 25,4 mm (Inch) größer ist als die Zahnteilung des zweiten Zahnreihenabschnitts (5), vorzugsweise im wesentlichen um ein Drittel größer als die Zahnteilung des zweiten Zahnreihenabschnitts (5) ist.

17. Sägeblatt nach einem der Ansprüche 14 bis 16, bei dem sich der erste Zahnreihenabschnitt an zumindest einem Ende des Sägeblatts (1) zumindest über 1/6 der Gesamtlänge des Sägeblatts erstreckt.

18. Sägeblatt nach Anspruch 15 bis 17, bei dem die Länge des zweiten Zahnreihenabschnitts (5) wenigstens dreimal der Länge des ersten Zahnreihenabschnitts entspricht.

19. Sägeblatt nach einem der Ansprüche 15 bis 18, bei dem die Zahnhöhe des ersten Zahnreihenabschnitts kleiner als die Zahnhöhe des zweiten Zahnreihenabschnitts (5).

20. Säge, insbesondere Handsäge, mit einem nach einem der Ansprüche 1 bis 19 ausgebildeten Sägeblatt (1).

## Claims

1. Saw blade, in particular for a hand saw on whose longitudinal side there is realized a row (11) of saw teeth, which has a geometric saw-tooth base line (17) extending along the saw blade and which is divided by at least one tooth gap (21) corresponding substantially to a tooth width, preferably by a plurality of tooth gaps (21), into row portions (47, 49) of a plurality of saw teeth, in particular more than two saw teeth, wherein there is provided, in the region of a tooth gap (21), a clearance (23) of recessed saw-blade material, which extends over the saw-tooth base line (17) into the saw blade (1) and comprises an undercut (41, 43), and wherein the tooth gap (21) and the clearance (23) merge into one another and constitute a recess (25), **characterized in that** the recess (25) has a constriction (51) substantially at the level of the saw-tooth base line (17).

2. Saw blade according to Claim 1, wherein the clearance (23) recessed beyond the saw-tooth base line (17) projects in an undercutting manner, by means of an in particular not insignificant component in the longitudinal direction of the saw blade, over a partial region of an adjacent row portion (47, 49), preferably of both row portions.

3. Saw blade according to either of Claims 1 or 2, wherein the tooth gap (21) tapers, in particular continuously, as far as the saw-tooth base line (17), in particular the tooth gap (21) is bounded by tooth flanks of adjacent saw teeth (33, 35).

4. Saw blade according to any one of Claims 1 to 3, wherein the clearance (23) widens, in particular continuously, substantially from the level of the saw-tooth base line (17), preferably with a maximum widening angle (α) of at least approximately 30°, in particular approximately 90°.

5. Saw blade according to Claim 4, wherein the maximum widening angle (α) of the clearance (23) is greater than a maximum included angle (β) of the tooth gap (21).

6. Saw blade according to any one of Claims 1 to 5, wherein the recess (25) has substantially the shape of a boot, wherein, in particular, a heel part of the clearance is assigned to a free end (3) of the saw blade (1) and a toe part of the clearance is assigned to a handle-side end (5) of the saw blade (1).

7. Saw blade according to any one of Claims 1 to 6, wherein an undercut depth (t₁, t₂) corresponds at least to one quarter of the mean tooth height of the row (11) of saw teeth.

8. Saw blade according to any one of Claims 1 to 7, wherein an undercut depth (t₁, t₂) corresponds maximally to the mean saw-tooth height of the row of saw teeth, and is preferably equal to half of the mean saw-tooth height.

9. Saw blade according to any one of Claims 1 to 8, wherein the clearance (23) comprises a first undercut (41), which faces towards a free end (3) of the saw blade (1), and a second undercut (43), which faces away from the free end (3) of the saw blade (1), wherein, in particular, the second undercut (43) is at a greater distance from the saw-tooth base line (17) than is the first undercut (41).

10. Saw blade according to Claim 9, wherein an undercut volume of the first and of the second undercut (43) are of substantially equal magnitude or the undercut volume of the second undercut (43) is greater than that of the first undercut (41), preferably by at least 1.5 times.

11. Saw blade according to any one of Claims 1 to 10, wherein a clearance depth (f) of the saw-tooth base line (17) is substantially equal to a mean saw-tooth height of the row (11) of saw teeth.

12. Saw blade according to any one of Claims 1 to 11, wherein the clearance (23) extends in the manner of a channel obliquely, relative to the saw-tooth base line (11), into the saw blade (1), in particular at an acute angle of 15° to 75°, preferably approximately 30°, wherein, in particular, the channel-type clearance (23) extends into the saw blade (1), in the course towards a handle-side end (5) of the saw blade (1), with an upward slant relative to the saw-tooth base line (17).

13. Saw blade according to any one of Claims 1 to 12, **characterized in that** the width b of the tooth gap (21) at the saw-tooth base line (17) corresponds substantially to the width of a saw tooth (33, 35) at the saw-tooth base line (17), in particular to the maximum width of the adjacent saw tooth.

14. Saw blade according to any one of Claims 1 to 13, **characterized in that** it is realized for a rectilinear cutting motion, in particular of a saw to be operated manually, and comprises, on a longitudinal side, at least one first tooth row portion, which is realized at least at one end of the saw blade (1) and whose tooth geometry, tooth shape and/or tooth dimension is/are identical or similar, and comprises a second tooth row portion (5), which is realized substantially in the centre of the saw blade (1) and whose tooth geometry, tooth shape and/or tooth dimension is/are identical or similar, the tooth geometry, the tooth shape, the tooth dimension and/or the like of the first tooth row portion differing from the tooth geometry, the tooth shape, the tooth dimension and/or the like of the second tooth row portion in such a way that the removed material volume of a fixed number of teeth of the first tooth row portion is less than the removed material volume of an equal number of teeth of the second tooth row portion.

15. Saw blade according to Claim 14, wherein the tooth pitch of the first tooth row portion is greater than the tooth pitch of the second tooth row portion (5).

16. Saw blade according to Claim 15, wherein the tooth pitch of the first tooth row portion is greater by at least 1, preferably at least 2, particularly preferably at least 3 teeth per 25.4 mm (inch) than the tooth pitch of the second tooth row portion (5), preferably substantially one third greater than the tooth pitch of the second tooth row portion (5).

17. Saw blade according to any one of Claims 14 to 16, wherein the first tooth row portion extends, at at least one end of the saw blade (1), over at least one sixth of the total length of the saw blade.

18. Saw blade according to Claims 15 to 17, wherein the length of the second tooth row portion (5) corresponds to at least three times the length of the first tooth row portion.

19. Saw blade according to any one of Claims 15 to 18, wherein the tooth height of the first tooth row portion is less than the tooth height of the second tooth row portion (5).

20. Saw, in particular hand saw, having a saw blade (1) realized according to any one of Claims 1 to 19.

## Revendications

1. Lame de scie, en particulier pour une scie à main, sur le côté longitudinal de laquelle est réalisée une rangée de dents de scie (11), qui présente une ligne de base géométrique (17) de dents de scie s'étendant le long de la lame de scie et est subdivisée par au moins un creux de dents (21), correspondant essentiellement à une largeur de dents, de préférence par plusieurs creux de dents (21), en sections de rangées (47, 49) de plusieurs dents de scie, en particulier de plus de deux de dents de scie, un dégagement (23) de matériau de lame de scie évidé qui s'étend sur la ligne de base des dents de scie (17) dans la lame (1), dans la zone d'un creux de dent (21), étant muni d'une contre-dépouille (41, 43), l'évidement (25) présentant un rétrécissement (51) essentiellement au niveau de la ligne de base des dents de scie (17), **caractérisée en ce que** le creux de dent (21) et le dégagement (23) se prolongent mutuellement et forment un évidement (25).

2. Lame de scie suivant la revendication 1, dans laquelle le dégagement (23), évidé de l'autre côté de la ligne de base des dents de scie (17), pénètre en contre-dépouille, par une composante directionnelle longitudinale de la lame de scie en particulier non négligeable, sur une zone partielle d'une section de rangées voisine (47, 49), de préférence de deux sections de rangées.

3. Lame de scie suivant l'une des revendications 1 et 2, dans laquelle le creux de dent (21) se rétrécit, en particulier en continu, jusqu'à la ligne de base des dents de scie (17), en particulier le creux de dent (21) est délimité par des flancs de dents de scie voisines (33, 35).

4. Lame de scie suivant l'une des revendications 1 à 3, dans laquelle le dégagement (23) s'élargit essentiellement, en particulier en continu, à partir du niveau de la ligne de base des dents de scie (17), de préférence avec un angle d'élargissement maximal (α) d'au moins environ 30°, en particulier d'environ 90°.

5. Lame de scie suivant la revendication 4, dans laquelle l'angle d'élargissement maximal (α) du dégagement (23) est plus grand qu'un angle d'ouverture maximal (β) du creux de dent (21).

6. Lame de scie suivant l'une des revendications 1 à 5, dans laquelle l'évidement (25) présente essentiellement la forme d'une botte, en particulier une partie de talon du dégagement étant associée à une extrémité libre (3) de la lame de scie (1) et une partie de doigts de pied du dégagement étant associée à une extrémité (5) du côté prise de la lame de scie (1).

7. Lame de scie suivant l'une des revendications 1 à 6, dans laquelle une profondeur de contre-dépouille (t₁, t₂) correspond au moins à un quart de la hauteur centrale de la rangée de dents de scie (11).

8. Lame de scie suivant l'une des revendications 1 à 7, dans laquelle une profondeur de contre-dépouille (t₁, t₂) correspond au maximum à la hauteur centrale de la rangée de dents de scie, est de préférence égale à la moitié de la hauteur centrale des dents de scie.

9. Lame de scie suivant l'une des revendications 1 à 8, dans laquelle le dégagement (23) comprend une première contre-dépouille (41), tournée vers une extrémité libre (3) de la lame de scie (1), et une seconde contre-dépouille (43), opposée à l'extrémité libre (3) de la lame de scie (1), en particulier la seconde contre-dépouille (43) étant plus distante de la ligne de base des dents de scie (17) que la première contre-dépouille (41).

10. Lame de scie suivant la revendication 9, dans laquelle un volume de contre-dépouille de la première et de la seconde contre-dépouille (43) est essentiellement plus élevé ou le volume de la seconde contre-dépouille (43) est plus élevé que celui de la première contre-dépouille (41), est de préférence supérieur d'au moins 1,5 fois.

11. Lame de scie suivant l'une des revendications 1 à 10, dans laquelle une profondeur de dégagement (f) de la ligne de base des dents de scie (17) est essentiellement égale à une hauteur centrale de la rangée de dents de scie (11).

12. Lame de scie suivant l'une des revendications 1 à 11, dans laquelle le dégagement (23) s'étend en forme de canal en oblique par rapport à la ligne de base des dents de scie (11) dans la lame de scie (1), en particulier sous un angle aigu de 15° à 75°, de préférence d'environ 30°, en particulier le dégagement (23) en forme de canal s'étendant de façon ascendante dans la lame de scie (1) par rapport à la ligne de base des dents de scie (17) dans son tracé en direction d'une extrémité du côté prise (5) de la lame de scie (1).

13. Lame de scie suivant l'une des revendications 1 à 12, **caractérisée en ce que** la largeur b du creux de dent (21) sur la ligne de base des dents de scie (17) correspond essentiellement à la largeur d'une dent de scie (33, 35) sur la ligne de base des dents de scie (17), en particulier à la largeur maximale de la dent de scie voisine.

14. Lame de scie suivant l'une des revendications 1 à 13, **caractérisée en ce qu'**elle est réalisée pour un mouvement de coupe rectiligne, en particulier d'une scie manuelle, et comprend sur un côté longitudinal au moins une première section de rangées de dents, qui est réalisée au moins sur une extrémité de la lame de scie (1) et dont la géométrie, la forme et/ou la dimension des dents sont identiques ou analogues, et une seconde section de rangées de dents (5), qui est réalisée essentiellement au centre de la lame de scie (1) et dont la géométrie, la forme et/ou la dimension des dents sont identiques ou analogues, la géométrie de dents, la forme des dents, la dimension des dents et/ou autres de la première section de rangées de dents différant de la géométrie de dents, de la forme de dents, de la dimension des dents et/ou autres de la seconde section de rangées de dents de telle sorte que le volume de coupe d'un nombre de dents défini de la première section de rangées de dents est plus faible que le volume de coupe du même nombre de dents de la seconde section de rangées de dents.

15. Lame de scie suivant la revendication 14, dans laquelle le pas de dents de la première section de rangées de dents est supérieur au pas de dents de la seconde section de rangées de dents (5).

16. Lame de scie suivant la revendication 15, dans laquelle le pas de dents de la première section de rangées de dents est plus élevé d'au moins 1, de préférence d'au moins 2, en particulier de préférence d'au moins 3 dents par 25,4 mm (pouce) que le pas de dents de la seconde rangée de dents (5), est de préférence essentiellement plus élevé d'un tiers que le pas de dents de la seconde rangée de dents (5).

17. Lame de scie suivant l'une des revendications 14 à 16, dans laquelle la première section de rangées de dents s'étend sur au moins une extrémité de la lame de scie (1) au moins sur 1/6 de la longueur totale de cette dernière.

18. Lame de scie suivant les revendications 15 à 17, dans laquelle la longueur de la seconde section de rangées de dents (5) correspond au moins à trois fois la longueur de la première section de rangées de dents.

19. Lame de scie suivant l'une des revendications 15 à 18, dans laquelle la hauteur de dents de la première section de rangées de dents est plus faible que la hauteur de dents de la seconde section de rangées de dents (5).

20. Scie, en particulier scie à main, comprenant une lame de scie (1) réalisée suivant l'une des revendications 1 à 19.
